# EUROPEAN PATENT SPECIFICATION

(11) **EP 3 447 314 B1**
(45) Date of publication and mention of the grant of the patent: **18.11.2020**
(21) Application number: 18176231.1
(22) Date of filing: 06.06.2018
(51) Int. Cl.: F15B 13/02, F15B 13/042

(54) **ELECTRICALLY CONTROLLED HOSE BURST VALVE ASSEMBLY**
ELEKTRISCH GESTEUERTE SCHLAUCHBERSTVENTILANORDNUNG
ENSEMBLE DE VANNE DE RUPTURE DE FLEXIBLE COMMANDÉ ÉLECTRIQUEMENT

(30) Priority: 25.08.2017 IT 201700096057
(43) Date of publication of application: 27.02.2019
(73) Proprietor: Robert Bosch GmbH, 70442 Stuttgart (DE)
(72) Inventor: Bruni, Simone, 41030 San Prospero (MO) (IT); Heemskerk, Edwinus, 97276 Margetshoechheim (DE); Ferraresi, Paolo, 41013 Castelfranco Emilia (MO) (IT)

(56) References cited:
- EP-A2- 0 952 358
- DE-A1-102014 204 070
- JP-A- 2000 337 304
- US-A- 5 170 692
- US-A- 5 207 059

## Description

The invention concerns a valve assembly according to the preamble of claim 1.

Such a valve assembly is known from JP 2000/337 304 A.

A further valve assembly is known from the data sheet "Compact Excavator Pipe-Rupture Valve - Series CFS" by the company Bucher Hydraulics (Reference: Reference: 300-P-9050076-E-03/11.2009). This valve assembly is directly attached to a cylinder or any other hydraulic actuator via a second port. A pipe or a hose is connected to a first port, wherein the pipe or the hose is connected to a source of pressure fluid. The third port is connected to a tank. When the pipe ruptures or the hose bursts the first valve seat is closed by a first piston in a fluid tight manner. In normal operation the position of the first piston is continuously adjustable via a hydraulic control pressure which acts on a pilot valve, such that the movement of the cylinder can be controlled.

EP 952 358 A2 shows a further valve assembly which acts as a hose rupture control valve unit and which uses a first piston with a control chamber.

DE 10 2014 204 070 A1 shows a valve assembly which has structural similarities with the inventive valve assembly. The first piston also has a first orifice and a control chamber. The first piston is connected in a different manner to the first and the second port and to the pilot valve. Therefore this valve assembly does not show the functionality explained above, which is compulsory for the invention.

The inventive valve assembly has the advantage that it can be controlled directly by an electric current. Thereby its construction is considerably simpler than that of the existing valve assembly by Bucher. The movement of the cylinder can be controlled very sensitive. The valve assembly is very compact. Furthermore the first piston stays open in case of a pipe or hose rupture, when a corresponding control current is supplied to the valve assembly. Especially when such a rupture occurs during a movement of the actuator the speed of the actuator will only increase by an insignificant amount, wherein the speed will not double irrespective of the working conditions.

According to the invention there is a second valve seat, which is closeable by a movable second piston, wherein the second piston is coupled to the armature, wherein the second piston is urged against the second valve seat by a spring, wherein the movement of the second piston is continuously adjustable via the electrical current in the coil, wherein there is a third valve seat, which is closeable by a moveable third piston, wherein there is a first fluid flow path from the control chamber via a second orifice, further via the second valve seat to the first port, wherein there is a second fluid flow path from the control chamber via the third valve seat to the first port, wherein the second flow path bypasses the second valve seat, such that the third valve seat is not part of the first flow path, wherein the pressure between the second orifice and the second valve seat urges the third piston against the third valve seat, wherein the second valve seat is located at the third piston, wherein the second and the third valve seat are located on opposing sides of the third piston. In consequence the first valve seat stays open, when an electrical current flows through the coil. The open area at the first valve seat depends mainly from the named current and is nearly independent from the pressures at the first and the second port. Especially when the hose or the pipe at the first port ruptures such that there is a sudden decrease in pressure at the first port, the first piston will only move by an insignificant amount. In no event the actuator connected to the second port will double its speed. Preferably there is a fixed coupling between the armature and the second piston, such that the named parts move synchronously.

Further improvements of the invention are indicated in the dependent claims.

Preferably the first piston delimits a third orifice which is continuously adjustable by a movement of the first piston, wherein the third orifice is located between the first port and the first valve seat with respect to fluid flow, wherein the open area of the third orifice increases, when the first piston is moved away from the first valve seat. The first valve seat guarantees that the flow between the first and the second port can be closed in a fluid tight manner. With the third orifice the characteristic line of the corresponding open area can be adjusted.

Preferably the first piston has a tube shaped end section, wherein the third orifice is delimited by at least one radial bore in the in the tube shaped end section, wherein the first orifice is delimited by at least one slot on a circumferential surface of the first piston. Preferably there are multiple radial bores and/or multiple slots. This configuration is simple to manufacture and cost effective.

Preferably the at least one radial bore and the at least one slot are located on opposite sides of the first valve seat.

Preferably there is a fourth valve seat, which is closeable by a moveable closure body, wherein the fourth valve seat is part of the first fluid flow path and the second fluid flow path too, wherein the moveable closure body and the third piston have opposite opening directions with respect to fluid flow. The closure body is preferably a ball. The configuration according to DE 10 2014 204 070 A1 is intended for one direction of flow only, namely from the first to the second port. The inventive valve assembly is typically used with two directions of flow. With a flow from the second port to the first port the named cylinder is typically lowered under the influence of gravity. In this case the pilot valve controls the speed of the movement. When the flow is from the first port to the second port the pilot valve is inactivated by the closed fourth valve seat. In consequence the first piston goes to its fully open positon. The flow rate from the first to the second port is typically controlled by a further valve which is connected to the inventive valve assembly by a hose or a pipe, whose rupture is safeguarded by the inventive valve assembly.

Preferably the fourth valve seat is located between the third valve seat and the first port with respect to fluid flow. At this location it is easy the put the fourth valve seat in the first and in the second fluid flow path.

Preferably there is a third port and a pressure relief valve, which opens a fluid connection from the control chamber to the third port, when the pressure at the second port exceeds a predetermined value, wherein the control chamber is fluidically connected to the second port via a check valve which only allows a flow from the control chamber to the second port. This feature is known from the valve assembly by Bucher explained above. The second port is protected from excessive pressure, by opening the first valve seat using the pressure relief valve.

Preferably the characteristic line of the open area of the first orifice versus the position of the first piston has a first section which begins at the closed first valve seat, wherein it increases linearly from zero with a first slope, wherein it is continued by a second section which increases linearly with a second slope, wherein the second slope is at least 2-times, preferably at least 4-times, larger than the first slope. With this configuration a very sensitive control at low speeds of movement can be achieved.

Preferably the housing has a fourth port, which is fluidically connected to the second port via a fourth orifice, wherein a fluid connection between the fourth port and the third port is closeable by a screw plug. In case of a rupture of the tube or hose the cylinder can be lowered by an external valve at the fourth port and/or be unscrewing the screw plug.

Preferably the housing has a first, a second and a third outer surface, which are flat and pairwise perpendicular to each other, wherein the first port is located on the first outer surface, wherein the second port is located on the second outer surface, wherein the first piston is moveable perpendicularly to the first outer surface, wherein the second and the third piston are moveable perpendicularly to the third outer surface. The corresponding housing is very compact and easy to manufacture. The third and/or the fourth port are preferably located on the third outer surface.

The features mentioned above and those which are still to be explained below can be used not only in the particular combination indicated but also in other combinations or in independent form without departing from the scope of the present invention.

The invention is explained in more detail below with reference to the accompanying drawings. It shows:
- Fig. 1: a perspective view of an inventive valve assembly;
- Fig. 2: a sectional view of the valve assembly according to fig. 1, wherein the section plane goes through the center line of the first piston;
- Fig. 3: a further sectional view of the valve assembly according to fig.1, wherein the section plane is marked in fig. 2 with U-U;
- Fig. 4: a sectional view of the pilot valve without the coil;
- Fig. 5: a diagram of the open area at the first orifice;
- Fig. 6: a diagram of the open area at the third orifice and the first valve seat; and
- Fig. 7: a schematic of the valve assembly according to fig. 1.

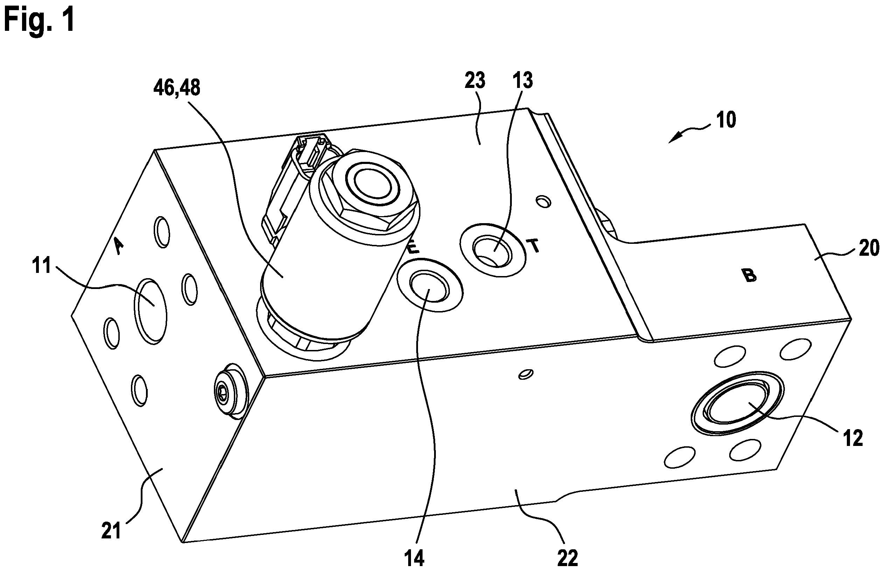

Fig. 1 shows a perspective view of an inventive valve assembly 10. The valve assemble 10 has a housing 20 with a first, a second and a third outer surface 21; 22; 23, which are flat and pairwise perpendicular to each other. When viewed on the third outer surface 23, the housing has an L-shape outline. The housing 20 is made of aluminum or cast iron. On the first outer surface 21 there is a first port 11, to which a hose or a pipe is connectable. On the second outer surface 22 there is a second port 12, to which an hydraulic actuator, especially a hydraulic cylinder is connectable. It is preferred that the second port 12 is directly connected to the hydraulic actuator, wherein it is most preferred when the second outer surface 22 abuts against the hydraulic actuator. On the third outer surface 23 there are a third and fourth port 13; 14. The third and the fourth 13; 14 port are each bores which go through the entire housing 20 perpendicular to the third outer surface 23, wherein they are closed with a plug screw on the opposing (in fig. 1 not visible) side of the housing 20.

There is a pilot valve 48 which is formed as cartridge valve. It is screwed into an matched bore in the third outer surface 23, such that only the part with the coil 46 is located outside of the housing 20.

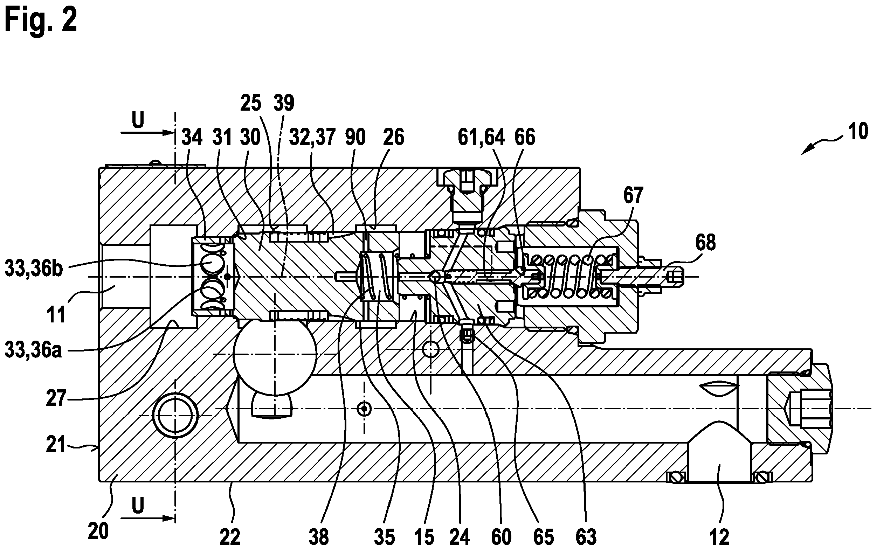

Fig. 2 shows a sectional view of the valve assembly 10 according to fig. 1, wherein the section plane goes through the center line 39 of the first piston 30, wherein it is parallel to the third outer surface (no. 23 in fig. 1).

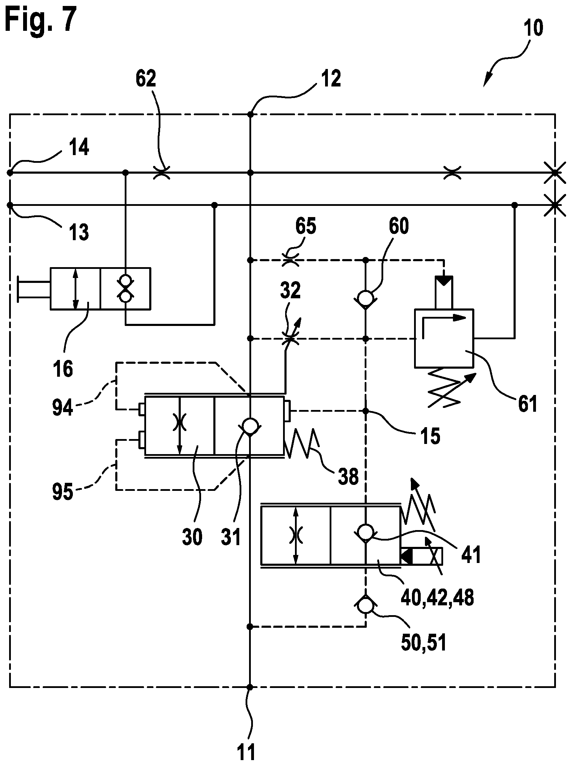

The first piston 30 is accommodated in a first bore 24 of the housing 10, wherein it is linearly moveable. The first bore 24 defines a first valve seat 31, which is preferably formed as a annular edge, which surrounds the center line 39 of the first piston 30. The diameter of the first valve seat 31 is somewhat smaller than the diameter of the first bore 24, such that the pressure at the second port 12 urges the first piston 30 away from the first valve seat 31. The corresponding fluid connection is designated with reference numeral 94 in fig. 7. Especially when the first pressure relief valve 61 opens, the first piston 30 moves away from the first valve seat 31. In other working conditions the pressure in the control chamber 15 exerts a higher force to the first piston 30 than the pressure at the second port 12. The hydraulically effective area of the first piston 30 with respect to the pressure at the first port 11 is about four times as large as the hydraulically effective area of the first piston 30 with respect to the pressure at the second port 12. The first valve seat 31 is closeable via the first piston 30, preferably with a cone shaped section of the first piston 30. The first port 11 is define by an open end of the first bore 24, such that the pressure at the first port 11 urges the first piston 30 away from the first valve seat 31. The corresponding fluid connection is designated with reference numeral 95 in fig. 7.

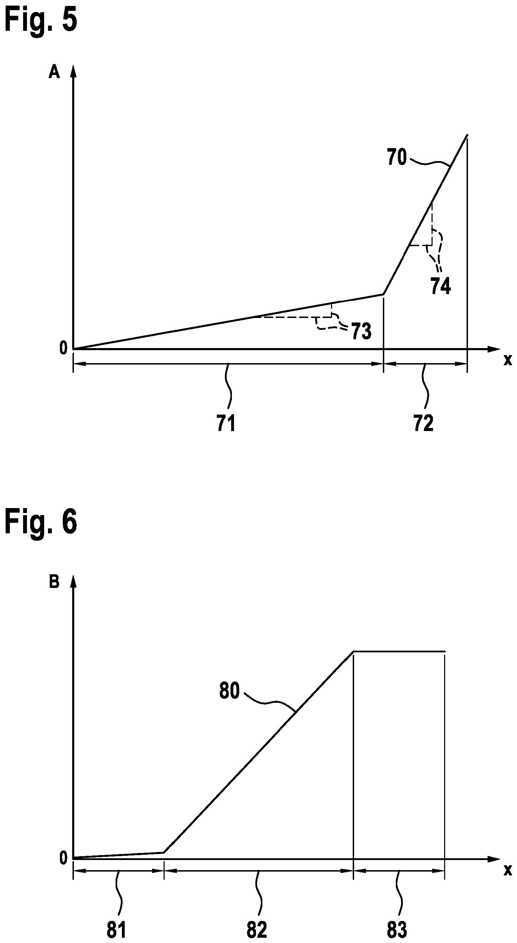

The first piston 30 has a tube shaped end section 34 which is oriented towards the first port 11. The tube shaped end section 34 has first and second radial bores 36a; 36b which form a third orifice 33, wherein the third orifice 33 is further delimited by a control edge on the housing 20. The third orifice 33 is located in the fluid flow path from the first to the second port 11; 12 between the first port 11 and the first valve seat 31. The combined fluid flow resistance of the third orifice and the first valve seat 31 is explained below with reference to fig. 6.

The first bore 24 has a first annular groove 25 which is fluidically connected to the second port 12, preferably via at least one bore in the housing 20. The first annular groove 25 surrounds the first piston 30 such that, the first and the second port 11; 12 are fluidically connectable via the first valve seat. The first piston 30 delimits a control chamber 15, wherein the first valve seat 31 and the control chamber 15 are located on opposing sides of first piston 30. The pressure in the control chamber 15 urges the piston against the first valve seat 31.

The housing 20 has a second ring shape groove 26 which surrounds the first piston 30. The second annular groove 26 defines a control edge of an adjustable first orifice 32. The first orifice 32 is further delimited by slots 37 on the circumferential surface 35 of the first piston 30, which are parallel to the center line 30 of the first piston 30. The open area of the first orifice 32 increases when the first piston 30 is moved away from the first valve seat 31, wherein further details are explained below with reference to fig. 5. The first orifice 32 is located between the first and the second annular groove 25; 26. The second annular groove 26 is connected to the control chamber 15 via second bores 90 in the first piston 30, such that the second port 12 is connected to control chamber 15 via the first orifice 32.

The control chamber 15 is further delimited by the housing 20 and a separate insert part 63, which is fixed inside the first bore 24. Between the insert part 63 and the first piston 30 there is a spring 38, preferably a coil spring, which urges the first piston 30 against the first valve seat 31. The insert part 63 accommodates a check valve 60 and a pressure relief valve 61. The check valve 60 is formed by a separate ball and a valve seat on the insert part 63. It allows only a fluid flow from the control chamber 15 to second port 12. In this fluid flow path there is fifth orifice 65, which has a defined, fixed flow resistance, wherein it is preferably formed by a separate part which is screwed into the insert part 63.

The pressure between the check valve 60 and the fifth orifice 65 acts on a slider 64 of the pressure relief valve 61 in an opening direction of a corresponding seat valve 66, which is formed by the slider 64 and the insert part 63. The slider 64 is urged in the opposing direction via a spring 67, whose pre tension is adjustable by a screw 68. Consequently the opening pressure of the pressure relief valve 61 is adjustable via the screw 68. The control chamber 15 is fluidically connectable to the third port (no. 13 in fig. 1) via the seat valve 66. Preferably there is a corresponding channel in the insert part 63, which is indicated by a dashed line in fig. 2.

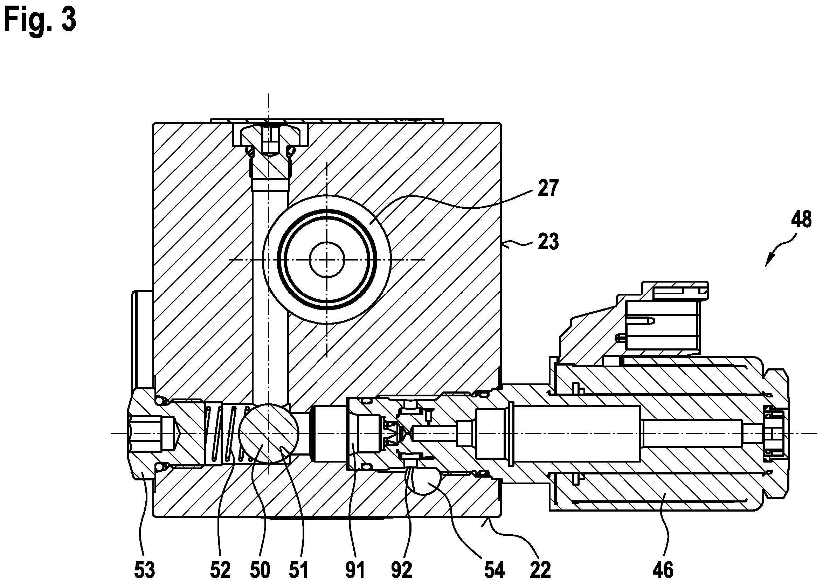

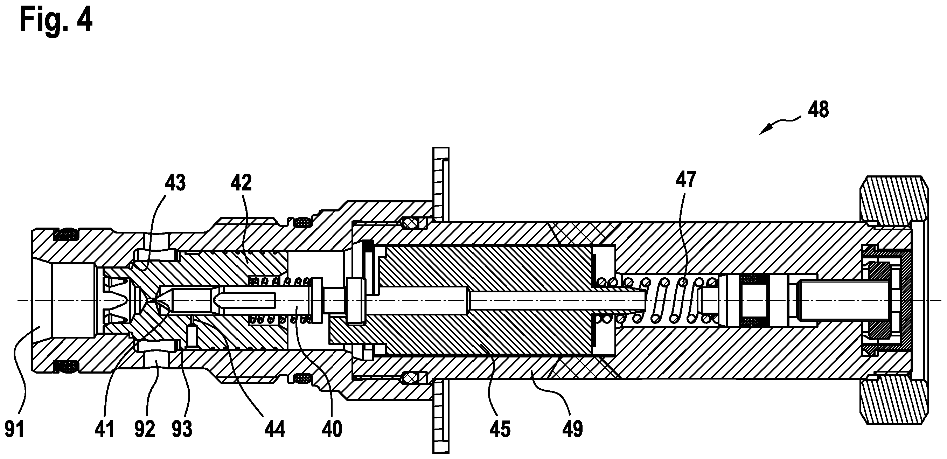

Fig. 3 shows a further sectional view of the valve assembly 10 according to fig .1, wherein the section plane is marked in fig. 2 with U-U. The pilot valve 48 is shown in a simplified way, wherein fig. 4 shows further details of the pilot valve 48.

There is a fluid flow path from the control chamber (no. 15 in fig. 2), via the pilot valve 48, further via a fourth valve seat 51, to a third annular groove 27 (see also fig. 2) of the first bore (no. 24 in fig. 2). The first port (no. 11 in fig. 2) is directly connected to the third annual groove 27.

The fourth valve seat 52 is closeable via a closure body 50, which is formed as a ball. The closure body 50 is mounted via an opening in the housing 20 which is closed by a screw plug 53. Between the screw plug 53 an the closure body 50 there is a spring 52, preferably a coil spring, which urges the closure body 50 against the fourth valve seat 51. The closure body 50 allows only a fluid flow from the pilot valve 48 to the first port (no. 11 in fig. 2), but not in the reverse direction.

The pilot valve 48 is formed as a cartridge valve wherein it has a coil 46, which can exert a magnet force on an armature (no. 45 in fig. 4).

Fig. 4 shows a sectional view of the pilot valve 48 without the coil (no. 46 in fig. 3). The section plane is the same as in fig. 3, wherein it goes through the center of the pilot valve 48. The armature 45 mounted in a pole tube 49 wherein it is linearly movable. The pole tube 49 is surrounded by the electrical coil (no. 46 in fig. 3) such that the coil can exert a magnetic force on the armature which is directed away from the second valve seat 41. The second valve seat 41 is closable by a second piston 40 which is coupled to the armature 45 such that the second piston 40 follows the movement of the armature 45 in a 1:1 relationship. There is a spring 47 which urges the second piston 40 against the second valve seat 41.

The second valve seat 41 is located on a movable third piston 42. The pilot valve 48 has a third valve seat 43 which is closeable by the third piston 42. The third valve seat 43 and the second valve seat 41 are located on opposing sides of the third piston 42. The pilot valve 48 has a fifth port 91, which is located on its end face, and a sixth port 92, which is located on its circumferential surface. The fifth port 91 is fluidically connected to first port via the fourth valve seat (no. 51 in fig. 3). The sixth port 92 is connected to the control chamber (no. 15 in fig. 2). In the pilot valve 48 there is a first and a second fluid flow path, which are parallel. The first fluid flow path goes from the sixth port 92 via a second orifice 44, further via the second valve seat 41 to the fifth port 92. The second orifice 44 has a fixed flow resistance wherein it is formed by a bore in the third piston 42. Over a small section the first fluid flow path goes via a small gap 93 between the third piston 42 and the surrounding pilot valve 48. The second fluid flow path goes from the sixth port 92 via the third valve seat 43 to the fifth port 91. The second fluid flow path bypasses the second valve seat 41, such that the third valve seat 43 is not part of the first flow path. The pressure between the second valve seat 41 and the second orifice 44 urges the third piston 42 against the third valve seat 43. The pressure at the sixth port 92 urges the third piston 42 away from the third valve seat. In consequence the third piston 42 follows the movement of the second piston 40. The hydraulically effective diameter of the second valve seat 31 is smaller than the hydraulically effective diameter of the third valve seat 43.

Fig. 5 shows a diagram of the open area at the first orifice (no. 32 in fig. 2). The vertical axis corresponds to the named open area A. The horizontal axis corresponds to the position x of the first piston. At x = 0 the first piston closes the first valve seat (no. 31 in fig. 2). In a first section 71 of the corresponding characteristic line 70 the open area A increases from zero with a first slope 73. The first section 71 is continued by a second section 72 in which the open area A of the characteristic line 70 increases further with a second slope 74. The second slope 74 is at least 2-times, preferably at least 4-times, larger than the first slope 73. In the first and the second section 71; 72 the characteristic line 70 has a linear behavior, as far as this is achievable by proper configuration of the slots (no. 37 in fig. 2) in the first piston.

Fig. 6 shows a diagram of the open area B at the third orifice (no. 33 in fig. 2) and the first valve seat (no. 31 in fig. 2). The vertical axis corresponds to the named open area B, which is based on the combined effect of the third orifice and the opening at the first valve seat. The horizontal axis corresponds to the position x of the first piston. At x = 0 the first piston closes the first valve seat. In a first section 81 of the corresponding characteristic line 80 the open area B is predominantly determined by the relatively small first radial bores (no. 36a in fig. 2). Therefore the characteristic line 80 increases relatively flat from zero. The first section 81 is continued by a second section 82 in which the open area A is predominantly determined by the relatively large second radial bores (no. 36b in fig. 2), wherein the first radial bores are fully open. Therefore the characteristic line 80 increases further with a steep slope. In the third section 83 the first and the second radial bores are fully open, wherein only the opening at the first valve seat influences the slope of the characteristic line. Because this opening is considerably larger than the open area at the first and the radial bores the characteristic line 80 is nearly flat in the third section 83.In the first, the second and the third section 81; 82; 83 the characteristic line 82 has a nearly linear behavior, as far as this is technically possible.

Fig. 7 shows a schematic of the valve assembly according to fig. 1. The first orifice 32 is shown as a separate symbol, wherein there is a coupling line to the first piston 30, which indicates that the first orifice 32 is defined by the first piston 30. All fluid connections are shown as described with reference to fig. 1 to 6.

A fourth port 14 is connected to the second port 12 via a fourth orifice 62. It is possible to attach an external valve (no shown) to the forth port 14. This valve is normally closed. It is only opened, when the hose or the pipe bursts, to move the hydraulic actuator connected to the valve assembly 10. It is also possible to permanently close the fourth port 14. In this case the screw plug 16 can be unscrewed to open a fluid connection between the fourth port 14 and the third port 13. The third port 13 is typically connected to a tank.

### Reference Numerals

- A: open area at the first orifice
- B: open area at the third orifice and at the first valve seat
- x: position of the first piston

- 10: valve assembly
- 11: first port
- 12: second port
- 13: third port
- 14: fourth port
- 15: control chamber
- 16: screw plug

- 20: housing
- 21: first outer surface
- 22: second outer surface
- 23: third outer surface
- 24: first bore
- 25: first annular groove
- 26: second annular groove
- 27: third annular groove

- 30: first piston
- 31: first valve seat
- 32: first orifice
- 33: third orifice
- 34: tube shape end section
- 35: circumferential surface
- 36a: first radial bore
- 36b: second radial bore
- 37: slot
- 38: spring
- 39: center line of the first piston

- 40: second piston
- 41: second valve seat
- 42: third piston
- 43: third valve seat
- 44: second orifice
- 45: armature
- 46: coil
- 47: spring
- 48: pilot valve
- 49: pole tube

- 50: closure body
- 51: fourth valve seat
- 52: spring
- 53: screw plug
- 54: bore

- 60: check valve
- 61: pressure relief valve
- 62: fourth orifice
- 63: insert part
- 64: slider
- 65: fifth orifice
- 66: seat valve
- 67: spring
- 68: screw
- 70: characteristic line of the first orifice
- 71: first section of 70
- 72: second section of 70
- 73: first slope
- 74: second slope

- 80: characteristic line of the third orifice and the first valve seat
- 81: first section of 80
- 82: second section of 80
- 83: third section of 80

- 90: second bore
- 91: fifth port
- 92: sixth port
- 93: gap
- 94: fluid connection
- 95: fluid connection

## Claims

1. Valve assembly (10) with a housing (20) having a first valve seat (31), which is closeable by a moveable first piston (30), wherein the housing has a first and a second port (11; 12), wherein the first port (11) is fluidically connected to the second port (12) via the first valve seat (31), wherein the pressure at the first port (11) urges the first piston (30) away from the first valve seat (31), wherein the first piston (30) delimits a first orifice (32) which is continuously adjustable by a movement of the first piston (30), wherein the first piston (30) delimits a control chamber (15), wherein the pressure in the control chamber (15) urges the first piston (30) against the first valve seat (31), wherein the second port (12) is fluidically connected to the control chamber (15) via the first orifice (32),wherein there is an armature (45) which is at least partially surrounded by a coil (46), wherein a fluid flow from the control chamber (15) to the first port (11) is adjustable via an electrical current in the coil (46),
**characterized in that** there is a second valve seat (41), which is closeable by a movable second piston (40), wherein the second piston (40) is coupled to the armature (45), wherein the second piston (40) is urged against the second valve seat by a spring (47), wherein the movement of the second piston (40) is continuously adjustable via the electrical current in the coil (46), wherein there is a third valve seat (43), which is closeable by a moveable third piston (42), wherein there is a first fluid flow path from the control chamber (15) via a second orifice (44), further via the second valve seat (41) to the first port (11), wherein there is a second fluid flow path from the control chamber (15) via the third valve seat (43) to the first port (11), wherein the second flow path bypasses the second valve (41) seat, such that the third valve seat (43) is not part of the first flow path, wherein the pressure between the second orifice (44) and the second valve seat (41) urges the third piston (42) against the third valve seat (43), wherein the second valve seat (41) is located at the third piston (42), wherein the second and the third valve seat (41; 43) are located on opposing sides of the third piston (42).

2. Valve assembly according to claim 1,
wherein the first piston (30) delimits a third orifice (33) which is continuously adjustable by a movement of the first piston (30), wherein the third orifice (33) is located between the first port (11) and the first valve seat (31) with respect to fluid flow, wherein the open area of the third orifice (33) increases, when the first piston (30) is moved away from the first valve seat (31).

3. Valve assembly according to claim 2,
wherein the first piston (30) has a tube shaped end section (34), wherein the third orifice (33) is delimited by at least one radial bore (36a; 36b) in the in the tube shaped end section (34), wherein the first orifice (32) is delimited by at least one slot (37) on a circumferential surface (35) of the first piston (30).

4. Valve assembly according to claim 3,
wherein the at least one radial bore (36a; 36b) and the at least one slot (37) are located on opposite sides of the first valve seat (31).

5. Valve assembly according to any of the preceding claims,
wherein there is a fourth valve seat (51), which is closeable by a moveable closure body (50), wherein the fourth valve seat (51) is part of the first fluid flow path and the second fluid flow path too, wherein the moveable closure body (50) and the third piston (42) have opposite opening directions with respect to fluid flow.

6. Valve assembly according to claim 5,
wherein the fourth valve seat (51) is located between the third valve seat (43) and the first port (11) with respect to fluid flow.

7. Valve assembly according to any of the preceding claims,
wherein there is a pressure relief valve (61), which opens a fluid connection from the control chamber (15) to the third port (13), when the pressure at the second port (12) exceeds a predetermined value, wherein the control chamber (15) is fluidically connected to the second port (12) via a check valve (60) which only allows a flow from the control chamber (15) to the second port (12).

8. Valve assembly according to any of the preceding claims,
wherein the characteristic line (70) of the open area of the first orifice (32) versus the position of the first piston (30) has a first section (72) which begins at the closed first valve seat (31), wherein it increases linearly from zero with a first slope (73), wherein it is continued by a second section (72) which increases linearly with a second slope (74), wherein the second slope (74) is at least 2-times, preferably at least 4-times, larger than the first slope (73).

9. Valve assembly according to any of the preceding claims,
wherein the housing has a fourth port (14), which is fluidically connected to the second port (12) via a fourth orifice (62), wherein a fluid connection between the fourth port (14) and the third port (12) is closeable by a screw plug (16).

10. Valve assembly according to any of the preceding claims,
wherein the housing (20) has a first, a second and a third outer surface (11; 12; 13), which are flat and pairwise perpendicular to each other, wherein the first port (11) is located on the first outer surface (21), wherein the second port (12) is located on the second outer surface (22), wherein the first piston (30) is moveable perpendicularly to the first outer surface (21), wherein the second and the third piston (40; 42) are moveable perpendicularly to the third outer surface (23).

## Patentansprüche

1. Ventilanordnung (10) mit einem Gehäuse (20) mit einem ersten Ventilsitz (31), der durch einen bewegbaren ersten Kolben (30) schließbar ist, wobei das Gehäuse einen ersten und einen zweiten Anschluss (11; 12) hat, wobei der erste Anschluss (11) über den ersten Ventilsitz (31) fluidisch mit dem zweiten Anschluss (12) verbunden ist, wobei der Druck am ersten Anschluss (11) den ersten Kolben (30) vom ersten Ventilsitz (31) weg drückt, wobei der erste Kolben (30) eine erste Öffnung (32) begrenzt, die durch eine Bewegung des ersten Kolbens (30) kontinuierlich einstellbar ist, wobei der erste Kolben (30) eine Steuerkammer (15) begrenzt, wobei der Druck in der Steuerkammer (15) den ersten Kolben (30) gegen den ersten Ventilsitz (31) drückt, wobei der zweite Anschluss (12) über die erste Öffnung (32) fluidisch mit der Steuerkammer (15) verbunden ist, wobei es eine Armatur (45) gibt, die zumindest teilweise von einer Spule (46) umgeben ist, wobei eine Fluidströmung von der Steuerkammer (15) zum ersten Anschluss (11) über einen elektrischen Strom (46) in der Spule einstellbar ist, **dadurch gekennzeichnet, dass** es einen zweiten Ventilsitz (41) gibt, der durch einen bewegbaren zweiten Kolben (40) schließbar ist, wobei der zweite Kolben (40) mit der Armatur (45) gekoppelt ist, wobei der zweite Kolben (40) durch eine Feder (47) gegen den zweiten Ventilsitz gedrückt wird, wobei die Bewegung des zweiten Kolbens (40) über den elektrischen Strom in der Spule (46) kontinuierlich einstellbar ist, wobei es einen dritten Ventilsitz (43) gibt, der durch einen bewegbaren dritten Kolben (42) schließbar ist, wobei es einen ersten Fluidströmungspfad von der Steuerkammer (15) über eine zweite Öffnung (44) und weiter über den zweiten Ventilsitz (41) zum ersten Anschluss (11) gibt, wobei es einen zweiten Fluidströmungspfad von der Steuerkammer (15) über den dritten Ventilsitz (43) zum ersten Anschluss (11) gibt, wobei der zweite Strömungspfad den Sitz des zweiten Ventils (41) umgeht, sodass der dritte Ventilsitz (43) nicht Teil des ersten Strömungspfads ist, wobei der Druck zwischen der zweiten Öffnung (44) und dem zweiten Ventilsitz (41) den dritten Kolben (42) gegen den dritten Ventilsitz (43) drückt, wobei der zweite Ventilsitz (41) am dritten Kolben (42) befindlich ist, wobei der zweite und der dritte Ventilsitz (41; 43) auf einander gegenüberliegenden Seiten des dritten Kolbens (42) befindlich sind.

2. Ventilanordnung nach Anspruch 1,
wobei der erste Kolben (30) eine dritte Öffnung (33) begrenzt, die durch eine Bewegung des ersten Kolbens (30) kontinuierlich einstellbar ist, wobei die dritte Öffnung (33) in Bezug auf die Fluidströmung zwischen dem ersten Anschluss (11) und dem ersten Ventilsitz (31) befindlich ist, wobei sich die offene Fläche der dritten Öffnung (33) vergrößert, wenn der erste Kolben (30) vom ersten Ventilsitz (31) weg bewegt wird.

3. Ventilanordnung nach Anspruch 2,
wobei der erste Kolben (30) einen rohrförmigen Endabschnitt (34) aufweist, wobei die dritte Öffnung (33) durch zumindest eine radiale Bohrung (36a; 36b) im im rohrförmigen Endabschnitt (34) begrenzt ist, wobei die erste Öffnung (32) durch zumindest einen Schlitz (37) auf einer umlaufenden Oberfläche (35) des ersten Kolbens (30) begrenzt ist.

4. Ventilanordnung nach Anspruch 3,
wobei die zumindest eine radiale Bohrung (36a; 36b) und der zumindest eine Schlitz (37) auf einander gegenüberliegenden Seiten des ersten Ventilsitzes (31) befindlich sind.

5. Ventilanordnung nach einem der vorhergehenden Ansprüche,
wobei es einen vierten Ventilsitz (51) gibt, der durch einen bewegbaren Schließkörper (50) schließbar ist, wobei der vierte Ventilsitz (51) Teil des ersten Fluidströmungspfads und auch des zweiten Fluidströmungspfads ist, wobei der bewegbare Schließkörper (50) und der dritte Kolben (42) in Bezug auf die Fluidströmung entgegengesetzte Öffnungsrichtungen haben.

6. Ventilanordnung nach Anspruch 5,
wobei der vierte Ventilsitz (51) in Bezug auf die Fluidströmung zwischen dem dritten Ventilsitz (43) und dem ersten Anschluss (11) befindlich ist.

7. Ventilanordnung nach einem der vorhergehenden Ansprüche,
wobei es ein Druckentlastungsventil (61) gibt, das eine Fluidverbindung von der Steuerkammer (15) zum dritten Anschluss (13) öffnet, wenn der Druck am zweiten Anschluss (12) einen vorbestimmten Wert überschreitet, wobei die Steuerkammer (15) über ein Rückschlagventil (60), das nur eine Strömung von der Steuerkammer (15) zum zweiten Anschluss (12) ermöglicht, fluidisch mit dem zweiten Anschluss (12) verbunden ist.

8. Ventilanordnung nach einem der vorhergehenden Ansprüche,
wobei die charakteristische Linie (70) der offenen Fläche der ersten Öffnung (32) gegen die Position des ersten Kolbens (30) einen ersten Abschnitt (72) aufweist, der bei dem geschlossenen ersten Ventilsitz (31) beginnt, wobei er ausgehend von Null mit einem ersten Anstieg (73) linear wächst, wobei er durch einen zweiten Abschnitt (72) fortgesetzt wird, der mit einem zweiten Anstieg (74) linear wächst, wobei der zweite Anstieg (74) mindestens 2-mal, vorzugsweise 4-mal, größer als der erste Anstieg (73) ist.

9. Ventilanordnung nach einem der vorhergehenden Ansprüche,
wobei das Gehäuse einen vierten Anschluss (14) aufweist, der über eine vierte Öffnung (62) fluidisch mit dem zweiten Anschluss (12) verbunden ist, wobei eine Fluidverbindung zwischen dem vierten Anschluss (14) und dem dritten Anschluss (12) durch einen Schraubstopfen (16) schließbar ist.

10. Ventilanordnung nach einem der vorhergehenden Ansprüche,
wobei das Gehäuse (20) eine erste, eine zweite und eine dritte äußere Oberfläche (11; 12; 13) aufweist, die flach und paarweise senkrecht zueinander sind, wobei der erste Anschluss (11) an der ersten äußeren Oberfläche (21) befindlich ist, wobei der zweite Anschluss (12) an der zweiten äußeren Oberfläche (22) befindlich ist, wobei der erste Kolben (30) senkrecht zur ersten äußeren Oberfläche (21) bewegbar ist, wobei der zweite und der dritte Kolben (40; 42) senkrecht zur dritten äußeren Oberfläche (23) bewegbar sind.

## Revendications

1. Ensemble de vanne (10) avec un boîtier (20) ayant un premier siège de vanne (31), qui peut être fermé par un premier piston mobile (30), le boîtier ayant un premier et un deuxième orifice (11 ; 12), le premier orifice (11) étant en communication fluidique avec le deuxième orifice (12) par l'intermédiaire du premier siège de vanne (31), la pression au niveau du premier orifice (11) poussant le premier piston (30) à l'opposé du premier siège de vanne (31), le premier piston (30) délimitant un premier orifice (32) qui peut être réglé en continu par un mouvement du premier piston (30), le premier piston (30) délimitant une chambre de commande (15), la pression dans la chambre de commande (15) poussant le premier piston (30) contre le premier siège de vanne (31), le deuxième orifice (12) étant en communication fluidique avec la chambre de commande (15) par l'intermédiaire du premier orifice (32), un induit (45) qui est au moins partiellement entouré par une bobine (46) étant présent, un écoulement de fluide provenant de la chambre de commande (15) vers le premier orifice (11) pouvant être réglé par l'intermédiaire d'un courant électrique dans la bobine (46),
**caractérisé en ce qu'**un deuxième siège de vanne (41) est présent, qui peut être fermé par un deuxième piston mobile (40), le deuxième piston (40) étant accouplé à l'induit (45), le deuxième piston (40) étant poussé contre le deuxième siège de vanne par un ressort (47), le mouvement du deuxième piston (40) pouvant être réglé en continu par l'intermédiaire du courant électrique dans la bobine (46), un troisième siège de vanne (43) étant présent, qui peut être fermé par un troisième piston mobile (42), un premier chemin d'écoulement de fluide étant présent depuis la chambre de commande (15) par l'intermédiaire d'un deuxième orifice (44), en outre par l'intermédiaire du deuxième siège de vanne (41) vers le premier orifice (11), un second trajet d'écoulement de fluide provenant de la chambre de commande (15) par l'intermédiaire du troisième siège de vanne (43) vers le premier orifice (11) étant présent, le second trajet d'écoulement contournant le deuxième siège de vanne (41), de sorte que le troisième siège de vanne (43) ne fasse pas partie du premier trajet d'écoulement, la pression entre le deuxième orifice (44) et le deuxième siège de vanne (41) poussant le troisième piston (42) contre le troisième siège de vanne (43), le deuxième siège de vanne (41) étant situé au niveau du troisième piston (42), le deuxième et le troisième siège de vanne (41 ; 43) étant situés sur les côtés opposés du troisième piston (42).

2. Ensemble de vanne selon la revendication 1,
le premier piston (30) délimitant un troisième orifice (33) qui peut être réglé en continu par un mouvement du premier piston (30), le troisième orifice (33) étant situé entre le premier orifice (11) et le premier siège de vanne (31) par rapport à l'écoulement de fluide, la surface ouverte du troisième orifice (33) augmentant, lorsque le premier piston (30) est éloigné du premier siège de vanne (31).

3. Ensemble de vanne selon la revendication 2,
le premier piston (30) ayant une section d'extrémité en forme de tube (34), le troisième orifice (33) étant délimité par au moins un alésage radial (36a ; 36b) dans la dans la section d'extrémité en forme de tube (34), le premier orifice (32) étant délimité par au moins une fente (37) sur une surface circonférentielle (35) du premier piston (30).

4. Ensemble de vanne selon la revendication 3,
l'au moins un alésage radial (36a ; 36b) et l'au moins une fente (37) étant situés sur des côtés opposés du premier siège de vanne (31).

5. Ensemble de vanne selon l'une quelconque des revendications précédentes,
un quatrième siège de vanne (51) étant présent, qui peut être fermé par un corps de fermeture mobile (50), le quatrième siège de vanne (51) faisant partie du premier trajet d'écoulement de fluide et du second trajet d'écoulement de fluide également, le corps de fermeture mobile (50) et le troisième piston (42) ayant des directions d'ouverture opposées par rapport à l'écoulement de fluide.

6. Ensemble de vanne selon la revendication 5,
le quatrième siège de vanne (51) étant situé entre le troisième siège de vanne (43) et le premier orifice (11) par rapport à l'écoulement de fluide.

7. Ensemble de vanne selon l'une quelconque des revendications précédentes,
une vanne de surpression (61) étant présente, qui ouvre une liaison fluidique de la chambre de commande (15) au troisième orifice (13), lorsque la pression au niveau du deuxième orifice (12) dépasse une valeur prédéfinie, la chambre de commande (15) étant en communication fluidique avec le deuxième orifice (12) par l'intermédiaire d'un clapet anti-retour (60) qui permet seulement un écoulement de la chambre de commande (15) vers le deuxième orifice (12).

8. Ensemble de vanne selon l'une quelconque des revendications précédentes,
la ligne caractéristique (70) de la surface ouverte du premier orifice (32) en fonction de la position du premier piston (30) ayant une première section (72) qui commence au niveau du premier siège de vanne fermé (31), augmentant linéairement à partir de zéro avec une première pente (73), se poursuivant par une seconde section (72) qui augmente linéairement avec une seconde pente (74), la seconde pente (74) étant au moins 2 fois, de préférence au moins 4 fois, plus grande que la première pente (73).

9. Ensemble de vanne selon l'une quelconque des revendications précédentes,
le boîtier ayant un quatrième orifice (14), qui est en communication fluidique avec le deuxième orifice (12) par l'intermédiaire d'un quatrième orifice (62), une liaison fluidique entre le quatrième orifice (14) et le troisième orifice (12) pouvant être fermée par un bouchon fileté (16).

10. Ensemble de vanne selon l'une quelconque des revendications précédentes,
le boîtier (20) ayant une première, une deuxième et une troisième surface extérieure (11 ; 12 ; 13), qui sont plates et perpendiculaires l'une à l'autre par paires, le premier orifice (11) étant situé sur la première surface extérieure (21), le deuxième orifice (12) étant situé sur la deuxième surface extérieure (22), le premier piston (30) étant mobile perpendiculairement à la première surface extérieure (21), le deuxième et le troisième piston (40 ; 42) étant mobiles perpendiculairement à la troisième surface extérieure (23) .
